# EUROPEAN PATENT SPECIFICATION

(11) **EP 2 974 782 B1**
(45) Date of publication and mention of the grant of the patent: **08.03.2017**
(21) Application number: 14382281.5
(22) Date of filing: 17.07.2014
(51) Int. Cl.: B01D 53/26

(54) **STEAM CONDITIONER-SEPARATOR APPARATUS**
DAMPFKONDITIONIERER-ABSCHEIDER-VORRICHTUNG
APPAREIL CONDITIONNEUR-SÉPARATEUR À VAPEUR

(43) Date of publication of application: 20.01.2016
(73) Proprietor: Munoz Segura, Antonio, 08840 Viladecans (Barcelona) (ES)
(72) Inventor: Munoz Segura, Antonio, 08840 Viladecans (Barcelona) (ES)
(74) Representative: Pons

(56) References cited:
- EP-A1- 0 841 085
- EP-A2- 1 674 026
- WO-A1-98/35744
- CN-U- 201 524 491
- DE-C1- 4 336 100
- FR-A- 921 557
- JP-A- 2004 105 805
- US-A- 4 253 315

## Description

### FIELD OF THE ART

The present invention relates to a water vapour conditioning-separating device aimed at eliminating the condensed particles carried over with said vapour through ducts and the droplets suspended therein, thereby obtaining practically dry vapour, improving its quality, without need for additional energy input.

### STATE OF THE ART

Only one type of water vapour separator is known in the state of the art, which only eliminates the liquid formations carried over with the vapour as it flows through the different ducts that form the facility, not eliminating the droplets contained therein.

This increases energy costs due to the fact that the calorific value of the vapour is decreased when carrying part of the water suspended. The water vapour conditioning-separating device of the present invention allows all the heat to return to its original state, which is called vapour enthalpy.

WO98/35744 discloses a device for separating water vapour comprising a tank with vapour inlet.

US4253315 discloses an apparatus for removing moisture from compressed air.

FR921557 discloses a device for condensing water vapour from a gals.

EP1674026 discloses an apparatus for removing dust and moisture from air.

### DESCRIPTION OF THE INVENTION

The present invention relates to a water vapour conditioning-separating device aimed at eliminating the condensed particles carried over with the vapour as it flows through the ducts that transport it, as well as the droplets suspended therein, thereby obtaining practically dry vapour, improving its quality, without need for additional energy input.

The water vapour conditioning-separating device comprises a condensation tank or chamber whereto a vapour transport duct is tangentially connected from a vapour generator or accumulator. Additionally, a dry vapour extraction duct axially passes through the tank, from the upper part thereof and without reaching the lower part, whereupon a filtering mass determining a labyrinthine passage for the vapour is disposed at a certain height inside the condensation tank or chamber and is contained within a minimum of two perforated plates which allow circulation therethrough of the vapour to be treated. Another perforated plate having inclined walls is eventually disposed under the described assembly and above the level of the lower inlet of the treated vapour extraction or outlet duct, for collecting and condensing the last water particles, particularly when there is a relatively high vapour flow rate.

The lower part of the tank ends in a funnel-shaped bottom having an outlet duct and, optionally, a purge valve to eliminate condensates.

Further, the orifices of all the perforated plates, both those that maintain the labyrinthine filtering mass and those having inclined walls, are preferably formed by punching, in such a manner as to form protruding necks wherein the material is irregularly broken, forming irregular edges that determine droplet condensation points, wherein the aforementioned necks in the plates containing the filtering mass are disposed in the direction of circulation of the vapour and, in the plate having inclined walls, in the opposite direction, precisely to prevent the last condensations formed thereon from passing through the perforations of the plate.

Likewise, all of the aforementioned perforated plates have an irregular contour with recesses, notches or similar defining peripheral passages of the condensates, which can slide down the walls of the condensation tank or chamber, without necessarily having to pass through the orifices of said plates.

The fact that the orifices of the perforated plate having inclined walls do not have irregular edges barely affects the retention of the condensates, as their only mission is that of increasing the contact surface with the circulating vapour and forcing the condensates formed on said surface to slide down the walls of the condensation chamber.

Optionally, the lower end of the dry vapour extraction duct is bevelled, avoiding a possible suction effect on the body of water accumulated at the bottom of the condensation tank or chamber until the moment of purging thereof.

In summary, the invention relates to a water vapour conditioning-separating device comprising a tank that acts as a condensation chamber, characterised in that it comprises a vapour inlet duct disposed on the upper part of the tank, where the vapour inflow to the tank is carried out tangentially to the wall of said device, flowing into an upper expansion enclosure of said tank, where the upper expansion enclosure is closed along the bottom by a filtering mass contained between the two first perforated plates that jointly determine, together with the filtering mass, a labyrinthine passage for the circulating vapour, in addition to comprising a treated vapour extraction duct that passes through the assembly formed by the filtering mass and the perforated plates.

The water vapour conditioning-separating device of the present invention allows the obtainment of dry saturated vapour with a quality = 1 (from 0.98% to 1 %) with absence of water particles in liquid state, improving the performance of heat transfer in all the production processes that use it, either directly to the product or indirectly.

This dry saturated vapour substantially improves heat transfer performance in all direct and also indirect exchange processes wherein, on mixing it with the product or medium to be treated, it is evenly distributed.

The water vapour conditioning-separating device eliminates the water that may be produced by boiler carryover and the water condensed by the vapour throughout the pipes of the facility, but its principal quality consists of eliminating the water microparticles in liquid state carried over with the vapour at high speed.

In order to eliminate these liquid water microparticles, the device centrifuges the vapour at the inlet, thereby separating the largest droplets, which are removed by gravity from the vertical walls to the bottom of the body, the smallest of which are filtered and aggregated by means of the perforated plates and the labyrinthine filtering mass, which separates them from the vapour and, by gravity, likewise fall to the bottom of the body, where they are eliminated by means of a purge valve.

### BRIEF DESCRIPTION OF THE DRAWINGS

In order to complement the description being made and with the object of helping to better understand the characteristics of the invention, in accordance with a preferred embodiment thereof, said description is accompanied, as an integral part thereof, by a set of drawings where, in an illustrative and non-limiting manner, the following has been represented:
Figure 1 shows an elevational view and axial cross-section of the water vapour conditioning-separating device of the present invention.
Figure 2 shows a plan view of the water vapour conditioning-separating device of the present invention.
Figure 3 shows a detailed view, at larger scale, of the perforations of the internal plates of the water vapour conditioning-separating device of the present invention.
Figure 4 shows a cross-sectional view taken along IV-IV of figure 1.

### DETAILED DESCRIPTION OF THE INVENTION

In accordance with the invention, the water vapour conditioning-separating device comprises a cylindrical frustoconical shaped tank (1) which acts as a condensation chamber, a vapour inlet duct (2) disposed on the upper part of the tank (1) wherein the vapour inflow to the tank is carried out tangentially to the cylindrical wall of said tank (1), flowing into an upper expansion enclosure (3) of said tank (1), wherein the upper enclosure (3) is closed along the bottom by a filtering mass (4) contained between two first perforated plates (5), whereupon the upper enclosure (3), the filtering mass (4) and the first perforated plates (5) jointly determine a labyrinthine passage for the circulating vapour where the greatest condensation of water particles carried over with said vapour is produced.

The water vapour conditioning-separating device also comprises a second perforated plate (8) having inclined walls sloping downward towards the walls of the tank (1), the second perforated plate (8) being disposed under the other two perforated plates (5).

The perforated plates (5, 8) comprise a series of notches (9) along their peripheral edge which may also be simple irregularities along their contour, to allow the condensed water to slide down the walls of the tank (1) towards the bottom thereof.

The tank (1) comprises a funnel (10) at the bottom thereof (1), which corresponds to the abovementioned frustoconical shaped part thereof (1) and a purge duct (11) adjacently disposed to the funnel (10), in such a manner that a manual or automatic purge valve may be coupled to the purge duct (11) to eliminate the condensed water.

The (8) water vapour conditioning-separating device also comprises a treated vapour extraction duct (6) that vertically passes through the assembly formed by the filtering mass (4) and the perforated plates (5, 8), wherein the vapour extraction duct (6) comprises a lower bevelled end (7) disposed at a certain distance from the bottom of the tank (1) and an upper end (14) wherethrough dry vapour flows out, preferably disposed in diametrical opposition to the vapour inlet duct (2).

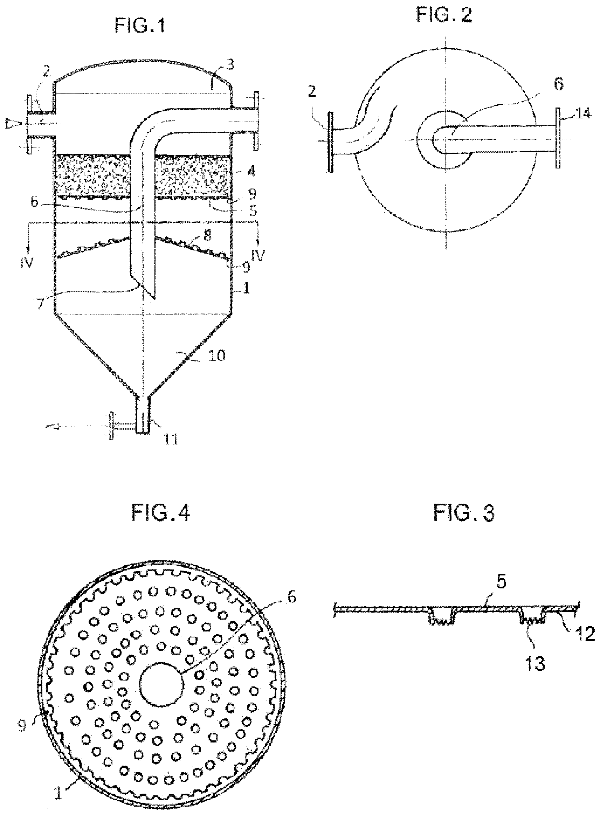

The perforated plates (5, 8) comprise orifices which, in turn, comprise protruding necks (12) having irregular edges that form points (13) that determine condensate drop formation spots, wherein said orifices of the perforated plates (5, 8) may be formed by simple punching of the constituent material thereof (5, 8), whereupon the irregular edges are formed by breakage of the material, as can be observed in figure 3.

The protruding necks (12) of the orifices of the first perforated plates (5) are disposed under the first perforated plates (5) in the direction of circulation of the vapour, whereas the protruding necks of the second perforated plate (8) are disposed above the second perforated plate (8) in the opposite direction, thereby determining a greater contact surface and facilitating the condensation of the last remnants of water.

The filtering mass (4) comprises a material that is unalterable regardless of changes in humidity, such a sponge made of stainless steel, plastic material or other, having the necessary structure to determine the abovementioned labyrinthine passage mentioned.

In other embodiments, there may be more than two first perforated plates (5); likewise, there may be more than one second perforated plate (8), although there may likewise not be any second perforated plate (8) at all, in accordance with the larger or smaller volume of vapour to be treated.

Following is a description of the operation of the (8) water vapour conditioning-separating device of the present invention.

The vapour produced by a conventional generator or accumulator penetrates through the vapour inlet duct (2) and, due to the tangential position thereof, has a centrifugal effect thereon in the manner of a cyclone or turbine, while simultaneously undergoing expansion in the interior of the upper enclosure (3). This effect causes the vapour, on coming into contact with the walls of the tank (1) in the area of said upper enclosure (3), to condense and a large portion of the water to be deposited on said walls which, sliding down said walls and aided by the peripheral passages of the perforated plates (5, 8) formed by the notches (9), flows directly towards the funnel (10) disposed at the bottom of the tank (1), where it is accumulated.

The rest of the vapour is forced to pass through the filtering mass (4) contained between the first perforated plates (5), between which filtering mass (4) said rest of the vapour will condense and another large portion of the water particles carried over will be retained, contributing to the formation of drops on the points (13) of the protruding necks (12) of the orifices of the first perforated plates (5).

The resulting vapour, practically free from liquid particles, is finally forced to pass through the second perforated plate (8), whereon the scarce remnants of humidity finally condense, sliding down the inclined plane of the second perforated plate (8) towards the walls of the tank (1), wherealong, as indicated, they slide down towards the funnel (10) disposed at the bottom of the tank (1), where the condensed body of water is accumulated. The dry vapour flows out of the upper end (14) of the vapour extraction duct (6) towards a point of application and the lower bevelled end (7) prevents the production of a suction effect, due to the forced circulation of the vapour, near the accumulated body of water that could give rise to carry-over thereof.

The (8) water vapour conditioning-separating device of the present invention may be disposed at any location of a vapour piping facility, although, understandably, and in order to avoid small final condensations, it will preferably be located as close as possible to the spot of vapour application. The number of orifices of the perforated plates (5, 8) may vary widely in accordance with the volume of vapour that must circulate therethrough.

Likewise, the walls of the tank (1) may have the desired thickness and resistance in order enable application in pressurised circuits.

Lastly, it should be noted that, while express reference is made in the foregoing to the drying or treatment of water vapour, the device may equally be applied to the treatment of any other fluids, for example for the separation of water or oil in pneumatic circuits, without having to essentially vary the construction described.

## Claims

1. Water vapour conditioning-separating device comprising a tank (1) for acting as a condensation chamber,
the device being **characterised in that** it further comprises a vapour inlect duct (2) disposed on the upper part of the tank (1),
wherein the inflow of vapour to the tank is carried out tangentially to the wall of said tank (1), flowing into an upper expansion enclosure (3) of said tank (1),
wherein the upper expansion enclosure (3) is closed along the bottom by a filtering mass (4) contained between two first perforated plates (5) that jointly determine, together with the filtering mass (4), a labyrinthine passage for the circulating vapour, also comprising a treated vapour extraction duct (6) that passes through the assembly formed by the filtering mass (4) and the perforated plates (5).

2. Water vapour conditioning-separating device, according to claim 1, **characterised in that** the treated vapour extraction duct (6) comprises a lower end (7) disposed at a certain distance from the bottom of the tank (1), and an upper end (14) wherethrough dry vapour flows out.

3. Water vapour conditioning-separating device, according to claim 2, **characterised in that** it also comprises a second perforated plate (8) having inclined walls sloping downward towards the walls of the tank (1) which is disposed under the first perforated plates (5) and above the lower end (7) of the treated vapour extraction duct (6).

4. Water vapour conditioning-separating device, according to any of the preceding claims, **characterised in that** the perforated plates (5, 8) comprise orifices that, in turn, comprise protruding necks (12) having irregular edges forming points (13) that determine condensate drop formation spots.

5. Water vapour conditioning-separating device, according to claim 4, **characterised in that** the protruding necks (12) of the orifices of the first perforated plates (5) are disposed under the first perforate plates (5) in the direction of circulation of the vapour.

6. Water vapour conditioning-separating device, according to claim 3 and 5, **characterised in that** the protruding necks (12) of the second perforated plate (8) are disposed above the second perforated plate (8) in the opposite direction to that of circulation of the vapour.

7. Water vapour conditioning-separating device, according to any of the preceding claims, **characterised in that** the perforated plates (5, 8) comprise a series of notches (9) along their peripheral edge for the condensed water to slide down the walls of the tank (1) towards the bottom thereof.

8. Water vapour conditioning-separating device, according to any of the preceding claims, **characterised in that** the lower end (7) of the treated vapour extraction duct (6) is bevelled.

9. Water vapour conditioning-separating device, according to any of the preceding claims, **characterised in that** the tank (1) comprises a funnel (10) at the bottom thereof (1) and a purge duct (11) adjacently disposed to the funnel (10).

10. Water vapour conditioning-separating device, according to claim 9, **characterised in that** it comprises a purge valve that can be coupled to the purge duct (11).

11. Water vapour conditioning-separating device, according to any of the preceding claims, **characterised in that** the upper end (14) wherethrough the dry vapour flows out is disposed in diametrical opposition to the vapour inlet duct (2).

## Patentansprüche

1. Vorrichtung zum Konditionieren und Abscheiden von Wasserdampf, die einen als Kondensationskammer dienenden Tank (1) umfasst,
wobei die Vorrichtung **dadurch gekennzeichnet ist, dass** sie weiterhin einen am oberen Bereich des Tanks (1) angeordneten Dampfeintrittskanal (2) umfasst,
wobei der Zufluss des Dampfes in den Tank tangential zur Wand des besagten Tanks (1) erfolgt und in ein oberes Erweiterungsgehäuse (3) des besagten Tanks (1) fließt, wobei das obere Erweiterungsgehäuse (3) entlang des Bodens durch eine Filtermasse (4) abgeschlossen ist, die zwischen zwei ersten durchlöcherten Platten (5) angeordnet ist, die zusammen mit der Filtermasse (4) einen labyrinthischen Durchgang für den zirkulierenden Dampf bestimmen, und ebenso einen behandelten Dampfentnahmekanal (6) umfasst, der die aus der Filtermasse (4) und den durchlöcherten Platten (5) gebildete Konstruktion durchdringt.

2. Vorrichtung zum Konditionieren und Abscheiden von Wasserdampf nach Anspruch 1, **dadurch gekennzeichnet, dass** der behandelte Dampfentnahmekanal (6) ein unteres Ende (7), das in einer bestimmten Entfernung vom Boden des Tanks (1) angeordnet ist, und ein oberes Ende (14), aus dem Trockendampf abfließt, umfasst.

3. Vorrichtung zum Konditionieren und Abscheiden von Wasserdampf nach Anspruch 2, **dadurch gekennzeichnet, dass** sie weiterhin eine zweite durchlöcherte Platte (8) umfasst, die geneigte, schräg nach unten zu den Wänden des Tanks (1) hin abfallende Wände aufweist und unterhalb der ersten durchlöcherten Platte (5) und oberhalb des unteren Endes (7) des behandelten Dampfentnahmekanals (6) angeordnet ist.

4. Vorrichtung zum Konditionieren und Abscheiden von Wasserdampf nach einem der vorhergehenden Ansprüche, **dadurch gekennzeichnet, dass** die durchlöcherten Platten (5, 8) Öffnungen umfassen, die ihrerseits vorstehende Hälse (12) mit unregelmäßigen Rändern umfassen, die Spitzen (13) bilden, die Kondensattropfen bildende Stellen definieren.

5. Vorrichtung zum Konditionieren und Abscheiden von Wasserdampf nach Anspruch 4, **dadurch gekennzeichnet, dass** die vorstehenden Hälse (12) der Öffnungen der ersten durchlöcherten Platten (5) in Flussrichtung des Dampfes unterhalb der ersten durchlöcherten Platten (5) angeordnet sind.

6. Vorrichtung zum Konditionieren und Abscheiden von Wasserdampf nach den Ansprüchen 3 und 5, **dadurch gekennzeichnet, dass** die vorstehenden Hälse (12) der zweiten durchlöcherten Platte (8) entgegen der Flussrichtung des Dampfes oberhalb der zweiten durchlöcherten Platte (8) angeordnet sind.

7. Vorrichtung zum Konditionieren und Abscheiden von Wasserdampf nach einem der vorhergehenden Ansprüche, **dadurch gekennzeichnet, dass** die durchlöcherten Platten (5, 8) entlang ihres peripheren Rands eine Reihe von Kerben (9) umfassen, damit das kondensierte Wasser an den Wänden des Tanks (1) zum Boden desselben hinabgleiten kann.

8. Vorrichtung zum Konditionieren und Abscheiden von Wasserdampf nach einem der vorhergehenden Ansprüche, **dadurch gekennzeichnet, dass** das untere Ende (7) des behandelten Dampfentnahmekanals (6) abgeschrägt ist.

9. Vorrichtung zum Konditionieren und Abscheiden von Wasserdampf nach einem der vorhergehenden Ansprüche, **dadurch gekennzeichnet, dass** der Tank (1) an dessen (1) Boden einen Trichter (10) und einen an den Trichter (10) angrenzenden Ablasskanal (11) umfasst.

10. Vorrichtung zum Konditionieren und Abscheiden von Wasserdampf nach Anspruch 9, **dadurch gekennzeichnet, dass** sie ein Ablassventil umfasst, das an den Ablasskanal (11) gekoppelt werden kann.

11. Vorrichtung zum Konditionieren und Abscheiden von Wasserdampf nach einem der vorhergehenden Ansprüche, **dadurch gekennzeichnet, dass** das obere Ende (14), aus dem der Trockendampf abfließt, dem Dampfeintrittskanal (2) diametral gegenüber angeordnet ist.

## Revendications

1. Appareil conditionneur-séparateur à vapeur comprenant une cuve (1) destinée à servir de chambre de condensation,
l'appareil étant **caractérisé en ce qu'**il comprend en outre un conduit d'entrée de vapeur (2) placé sur la partie supérieure de la cuve (1),
dans lequel l'arrivée de vapeur dans la cuve se fait tangentiellement à la paroi de ladite cuve (1), coulant dans un coffre de détente supérieur (3) de ladite cuve (1),
dans lequel le coffre de détente supérieur (3) est fermé au fond par une masse de filtrage (4) contenue entre deux premières plaques perforées (5) qui déterminent conjointement avec la masse de filtrage (4), un passage labyrinthique pour la vapeur en circulation, comprenant également un conduit d'extraction de la vapeur traitée (6) qui passe dans l'ensemble formé par la masse de filtrage (4) et les plaques perforées (5).

2. Appareil conditionneur-séparateur à vapeur, selon la revendication 1, **caractérisé en ce que** le conduit d'extraction de la vapeur traitée (6) comprend une extrémité inférieure (7) placée à une certaine distance du fond de la cuve (1), et une extrémité supérieure (14) par laquelle s'écoule la vapeur sèche.

3. Appareil conditionneur-séparateur à vapeur, selon la revendication 2, **caractérisé en ce qu'**il comprend également une seconde plaque perforée (8) présentant des parois inclinées descendant en direction des parois de la cuve (1) qui est placée sous les premières plaques perforées (5) et au-dessus de l'extrémité inférieure (7) du conduit d'extraction de la vapeur traitée (6).

4. Appareil conditionneur-séparateur à vapeur, selon n'importe laquelle des revendications précédentes, **caractérisé en ce que** les plaques perforées (5, 8) comprennent des orifices qui, eux, comprennent des collets faisant saillie (12) présentant des bords irréguliers formant des pointes (13) qui déterminent des points de formation de gouttes de condensat.

5. Appareil conditionneur-séparateur à vapeur, selon la revendication 4, **caractérisé en ce que** les collets faisant saillie (12) des orifices des premières plaques perforées (5) sont placés en dessous des premières plaques perforées (5) dans le sens de circulation de la vapeur.

6. Appareil conditionneur-séparateur à vapeur, selon la revendication 3 et 5, **caractérisé en ce que** les collets faisant saillie (12) de la seconde plaque perforée (8) sont placés au-dessus de la seconde plaque perforée (8) dans le sens opposé à celui de circulation de la vapeur.

7. Appareil conditionneur-séparateur à vapeur, selon n'importe laquelle des revendications précédentes, **caractérisé en ce que** les plaques perforées (5, 8) comprennent une série d'encoches (9) tout au long de leur bordure périphérique pour que l'eau condensée glisse en descendant sur les parois de la cuve (1) vers le fond de cette dernière.

8. Appareil conditionneur-séparateur à vapeur, selon n'importe laquelle des revendications précédentes, **caractérisé en ce que** l'extrémité inférieure (7) du conduit d'extraction de la vapeur traitée (6) est taillée en biseau.

9. Appareil conditionneur-séparateur à vapeur, selon n'importe laquelle des revendications précédentes, **caractérisé en ce que** la cuve (1) comprend un entonnoir (10) au fond de cette dernière (1) et un conduit de vidange (11) adjacent à l'entonnoir (10).

10. Appareil conditionneur-séparateur à vapeur, selon la revendication 9, **caractérisé en ce qu'**il comprend un robinet de vidange qui peut être couplé au conduit de vidange (11).

11. Appareil conditionneur-séparateur à vapeur, selon n'importe laquelle des revendications précédentes, **caractérisé en ce que** l'extrémité supérieure (14) par laquelle s'écoule la vapeur sèche est placée de façon à être diamétralement opposée au conduit d'entrée de vapeur (2).
